# EUROPEAN PATENT SPECIFICATION

(11) **EP 4 030 328 B1**
(45) Date of publication and mention of the grant of the patent: **14.01.2026**
(21) Application number: 21152080.4
(22) Date of filing: 18.01.2021
(51) Int. Cl.: G06F 21/62, G06F 21/60, H04W 4/02, H04W 4/029, H04W 12/02

(54) **METHOD FOR ENABLING CONTACT DETECTION AMONG A PLURALITY OF PERSONS AND FOR ENABLING CONTACT TRACING FOR THE PLURALITY OF PERSONS INDIVIDUALLY, SYSTEM, SERVER ENTITY OR FUNCTIONALITY OR EDGE DEVICE OR WEARABLE DEVICE, COMPUTING DEVICE, PROGRAM AND COMPUTER-READABLE MEDIUM**
VERFAHREN ZUR ERMÖGLICHUNG DER KONTAKTDETEKTION UNTER EINER VIELZAHL VON PERSONEN UND ZUR ERMÖGLICHUNG DER INDIVIDUELLEN KONTAKTVERFOLGUNG FÜR DIE VIELZAHL VON PERSONEN, SYSTEM, SERVEREINHEIT ODER FUNKTIONALITÄT ODER EDGE-VORRICHTUNG ODER WEARABLE-VORRICHTUNG, RECHENVORRICHTUNG, PROGRAMM UND COMPUTERLESBARES MEDIUM
PROCÉDÉ D'ACTIVATION DE DÉTECTION DE CONTACT PARMI UNE PLURALITÉ DE PERSONNES ET D'ACTIVATION DE TRAÇAGE DE CONTACT INDIVIDUEL POUR LA PLURALITÉ DE PERSONNES, SYSTÈME, ENTITÉ OU FONCTIONNALITÉ DE SERVEUR OU DISPOSITIF DE BORD OU DISPOSITIF PORTABLE, DISPOSITIF INFORMATIQUE, PROGRAMME ET SUPPORT LISIBLE PAR ORDINATEUR

(43) Date of publication of application: 20.07.2022
(73) Proprietor: Deutsche Telekom AG, 53113 Bonn (DE)
(72) Inventor: ROLLIN, Hannes, 19055 Schwerin (DE); MITEV, Martin, 53113 Bonn (DE); QUECK, Oliver, 72813 Sankt Johann - Würtingen (DE)
(74) Representative: Schwöbel, Thilo K.

(56) References cited:
- BENSKY T: "A no-phone/no-app contact tracing hardware token", ARXIV.ORG, CORNELL UNIVERSITY LIBRARY, 201 OLIN LIBRARY CORNELL UNIVERSITY ITHACA, NY 14853, 6 August 2020 (2020-08-06), XP081735578
- WILLIAM J BUCHANAN ET AL: "Review and Critical Analysis of Privacy-preserving Infection Tracking and Contact Tracing", ARXIV.ORG, CORNELL UNIVERSITY LIBRARY, 201 OLIN LIBRARY CORNELL UNIVERSITY ITHACA, NY 14853, 10 September 2020 (2020-09-10), XP081760207

## Description

### BACKGROUND

The present invention relates to a method for enabling contact detection among a plurality of persons and for enabling contact tracing for the plurality of persons individually, by means of each of the plurality of persons wearing or carrying a wearable device of a plurality of wearable devices.

Furthermore, the present invention relates to a system for enabling contact detection among a plurality of persons and for enabling contact tracing for the plurality of persons individually, by means of each of the plurality of persons wearing or carrying a wearable device of a plurality of wearable devices.

Additionally, the present invention relates to a server entity or a functionality or edge device or a wearable device for enabling contact detection among a plurality of persons and for enabling contact tracing for the plurality of persons individually.

Furthermore, the present invention relates to a computing device, especially a mobile phone or a personal digital assistant, and especially as part of an inventive system.

Additionally, the present invention relates to a program and to a computer-readable medium for enabling contact detection among a plurality of persons and for enabling contact tracing for the plurality of persons individually according to the inventive method.

It is conventionally known to realize contact detection and/or contact tracing for a plurality of persons by means of using wearable devices, especially so-called ultra-wideband wearable devices, or ultra-wideband tags. Such wearable devices typically store log data related to the contact situation of the respective or considered wearable device with other wearable devices being or having been in proximity during a considered time interval such as, e.g., a day or a work shift, thereby providing the possibility - e.g. in workplaces or other environments where mobile phones are either unsuitable to be carried or undesirable or banned - to either help to avoid the spread of infectious diseases or at least to be able to detect encounters between at least two persons and later on to trace such contacts or encounters.

However, such log data need to be moved, or transmitted, from the respective wearable device or tag, towards a device of the rightful owner of these log data - i.e. the person having carried the respective wearable device during the respective time interval covered by the log data - without being visible or usable to anyone else, especially also including the organization providing the use of the wearable devices and their infrastructure, such as the respective person's employer or the like.

In the context of contact tracing, the article "A No-Phone/No-App Contact Tracing Hardware Token" (T. Bensky, arXiv:2008.02851) describes an open-source, hardware-based contact tracer that implements strict peer-to-peer contact tracing without the use of a mobile phone or an app. The article "Review and Critical Analysis of Privacy-preserving Infection Tracking and Contact Tracing" (W.J. Buchanan et al., arXiv:2009.05126) discusses several approaches for contact tracing and the enabling methods used to realize the corresponding infrastructure.

Although more and more smartphones come with ultra-wideband capabilities, it is also the direct data links that are lacking between tags and phones; complicating this situation, such phones are often unavailable or downright forbidden in certain places, e.g. where contact tracing should be performed (via, e.g. enterprise protections systems, EPS), and phones may be switched off (or suffering from poor reception) around the time of returning the tags. Consequently, log data from the tags must somehow take an indirect route, which necessitates special security measures, since the log data must be neither visible to nor downloadable for anyone but the rightful owner.

### SUMMARY

An object of the present invention is to provide a technically simple, effective and cost effective solution for enabling contact detection and contact tracing among a plurality of persons wearing or carrying wearable devices and for securely transmitting or moving the resulting log data of or generated by such wearable devices to a computing device of the respective person. A further object of the present invention is to provide a corresponding system, server entity or functionality or edge device or wearable device, an accordingly programmed computing device, especially a mobile phone or a personal digital assistant, and a corresponding program and computer-readable medium.

The object of the present invention is achieved by a method according to claim 1. It is thereby advantageously possible according to the present invention to securely move or transmit log data produced or generated by wearable devices (or tags), based on contact or encounter situations between at least two persons, to or towards the respective person's computing device, i.e. to the rightful owner of these log data.

When using contact detecting and/or tracing tags or wearable devices, these tags or wearable devices allow to combine high-precision contact tracing - especially if ultra-wideband, UWB, wearables or wearable devices or tags are used - with a decentralized risk calculation on a computing device, often or typically the users' smartphones. Typically, each wearable device or tag has a unique ID, or tag identifier - typically contained on a QR code sticker on the tag's case - which is broadcast and saved by other wearable devices or tags in the vicinity. The sum or combination of these measurements gives rise to logs (or log data), which are stored on the wearable device or tag and needs somehow to be transported to the computing device or phone of the rightful owner of the log data. Especially, the wearable devices or tags are typically not personalized per se as they can be used and reused by anyone (typically among the group of persons concerned, e.g. the staff of an organization or a differently defined group of persons), but during one session, only a single user is typically using one wearable device or tag.

According to the present invention, normally a certain number of persons is considered such as, especially, the staff of an enterprise or of an organization. It is aimed at enabling contact detection and contact tracing for these persons such that contact tracing is able to be performed individually for each person, and typically performed by each person individually using their personal computing device, especially a smart phone or other personal portable device.

During operation, e.g. during a work shift or during a workday, each person is wearing or carrying a wearable device or tag (typically one, but, in principle, it is not excluded to wear more than one tag) of the plurality of wearable devices. To each wearable device is assigned or each wearable device is associated to a tag identifier, i.e. an identifying information such as a serial number or the like. At a specific point in time, each wearable device or each tag is associated to exactly one tag identifier; however, in principle according to the present invention, it is not excluded that one and the same wearable device or tag is able to be associated or assigned (successively) to more than one tag identifier, especially in order to still enhance the level of data protection or data privacy, especially by avoiding to create specific pattern, e.g. regarding the usage of certain wearable devices or tags by certain persons or the like. However, in case that more than one tag identifiers are able to be associated or assigned to one and the same wearable device or tag, a mechanism is needed to securely identify or determine such tag identifier without doubt each time the wearable device or tag is used. In the following, the invention is mainly described under the assumption that a tag identifier is fixedly, i.e. unchangeably, associated or assigned to a wearable device or tag.

According to the present invention, the wearable devices or tags, while in operation, more or less continuously, i.e. repeatedly, broadcast the assigned or associated (at this point in time unique) tag identifier (using the wireless communication interface of the wearable devices), i.e. these broadcasts are typically performed, by the wearable devices and under normal conditions, by applying a certain rate of broadcasts (i.e. a number of broadcasts per time unit, such as, typically once per second (i.e. 1 Hz) or the like; usual such broadcast rates might range from about 0,1 Hz (i.e. once every 10 seconds) to about 10 Hz (ten broadcasts per second)); a broadcast typically corresponding to a radio frequency signal being emitted by the respective wearable device applying a certain standardized or usual emission power such that another wearable device, located in proximity, is able to receive such radio frequency signal and derive or determine, from some signal parameter (such as, typically, some signal strength parameter) and/or from some signal content (such as, e.g., time stamp information and/or emission power information) an indication regarding the distance between both wearable devices. Of course, a corresponding broadcast and radio frequency signal reception procedure is symmetric and both are occurring simultaneously. This also means that, in case that more than two wearable devices are present or located at a specific location or within a considered area (of a size or extension smaller than the radio frequency coverage area of each of the wearable devices), there might be many broadcasts and many radio frequency signals to be received and processed, often leading to - in case of a density of wearable devices (and/or in case of a rate of radio frequency signals to be received and/or processed by each one of the wearable devices considered) exceeding a certain density threshold - the wearable devices or tags broadcasting the radio frequency signals less often in such high density conditions, i.e. the above mentioned rate of broadcasts (under normal conditions) might be adaptively reduced in such high density conditions. However, each such broadcast event of a wearable device involves the wearable device transmitting or broadcasting its (at least temporarily) associated or assigned tag identifier (hereinafter also called tag identifier information).

Hence according to the present invention, in a contact situation of a wearable device with a further wearable device (of the plurality of wearable devices), the wearable device is able, by means of the wearable device's wireless communication interface and with respect to the further wearable device, to determine repeatedly the distance, at different points in time, towards the further wearable device and to receive (typically at a plurality of points in time) the further wearable device's tag identifier. From these received broadcast pieces of information (that each wearable device is able to receive from the other wearable devices nearby, i.e. within the coverage area of the respective other wearable device), each wearable device generates (and typically stores) log data, this log data corresponding to or representing the contact situation of the wearable device with the further wearable device (in case of only one further wearable device) or with the plurality of further wearable devices (in case of more than one further wearable device nearby).

According to the present invention, by means of using a server entity or functionality and an edge device, an individual, hence privacy protected, contact tracing is provided for such that a person is enabled to use an associated or owned computing device for performing the individual contact tracing regarding herself, i.e. regarding the wearable device or tag having been associated to (and worn by) this person (or regarding the plurality of wearable devices or tags previously worn). According to the present invention, this is possible to be implemented by means of:
-- in a first step, the computing device generates a key pair comprising a private key and a public key, and the computing device transmits the public key to the server entity or functionality,
-- in a second step, the log data, being generated while the wearable device is used, are stored in the wearable device, and the computing device receives, from the wearable device, the wearable device's tag identifier,
-- in a third step, the log data, stored in the wearable device, are transmitted to the edge device, encrypted, by the edge device, involving the public key, and transmitted as encrypted log data to the server entity or functionality,
-- in a fourth step, the encrypted log data are transmitted from the server entity or functionality to the computing device.

By means of transmitting - between the edge device, the server entity or functionality, and the computing device - the log data only in encrypted form, it is advantageously possible to ensure that no one else than the rightful user is enabled to analyze or otherwise use these log data.

According to the present invention, it is advantageously possible and preferred that, prior to the third step, the public key is transmitted, by the server entity or functionality, to the edge device, wherein during the third step, the edge device
-- generates a random further key,
-- encrypts the log data using the further key, thereby generating the encrypted log data, and
-- additionally encrypts the further key using the public key, thereby generating the encrypted further key,
wherein both the encrypted log data, and the encrypted further key are transmitted to the server entity or functionality.

Thereby, it is advantageously possible to provide for an efficient solution to transfer the log data to the computing device in a secure and protected manner.

According to the present invention, it is furthermore advantageously possible and preferred that the wearable device's tag identifier is transmitted, by the wearable device, to the computing device prior to or after the wearable device being worn, wherein the wearable device's tag identifier is especially transmitted to the computing device using at least one out of the following:
-- an optical code, especially a QR-code, or an optically readable or detectable identifier statically provided on or attached to the wearable device or dynamically displayed by means of a display device or module of the wearable device, and especially being scanned or otherwise detected by a camera device of or associated to the computing device,
-- RFID, radio frequency identification, technology between the wearable device and an RFID reading component or module of the computing device,
-- the wireless communication interface of the wearable device - or a further wireless communication interface of the wearable device, distinct from the wireless communication interface, especially according to one of the Bluetooth and Zigbee communication standards -, and a wireless communication interface of the computing device.

Thereby, it is advantageously possible to safely and easily transmit the wearable device's tag identifier to the computing device prior to or after the wearable device being worn.

According to the present invention, it is furthermore advantageously possible and preferred that, in the third step, the log data are transmitted to the edge device using a secure data transmission between the wearable device and the edge device, using
-- a wireline communication interface of the wearable device, especially using wireline contacts of the wearable device used for charging the wearable device, or
-- the wireless communication interface of the wearable device or a further wireless communication interface of the wearable device.

According to the present invention, it is advantageously furthermore possible and preferred that the computing device generates a log access token - especially during the first step while or in connection with generating the private and public keys -, and transmits the log access token to the server entity or functionality.

It is thereby advantageously possible according to the present invention that the computing device provides a credential information that can later on be used to authenticate the computing device in view of requesting the encrypted log data.

According to the present invention, it is furthermore advantageously possible and preferred that, in the fourth step, the encrypted log data are able to be retrieved, by the computing device, from the server entity or functionality by means of the computing device requesting the encrypted log data using both the log access token and a signed log access token, the signed log access token being signed by means of the private key.

According to a further preferred embodiment of the present invention, the wireless communication interface of the wearable devices is an ultra-wideband interface allowing for a high-precision contact detection and tracing.

Additionally, it is furthermore preferred that the tag identifier is used for the upload of log data (from the edge device) to the server entity or functionality. In order to determine which log data (or, rather which encrypted log data) correspond to the computing device, the log access token is used.

Furthermore, the present invention relates to a system according to claim 8.

Additionally, the present invention relates to a program according to claim 9.

Still additionally, the present invention relates to a computer-readable medium according to claim 10.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a plurality of persons in a contact detection and/or contact tracing setting, wherein each of the plurality of persons is wearing or carrying a wearable device (or tag) of a plurality of wearable devices (or tags).
Figure 2 schematically illustrates a situation of a plurality of wearable devices (or tags) being connected to an edge device, and the edge device communicating with a server entity or functionality.
Figure 3 schematically illustrates a contact situation of a wearable device with a further wearable device, the wearable device being able, by means of the wearable device's wireless communication interface and with respect to the further wearable device, to determine repeatedly the distance towards the further wearable device and to receive the further wearable device's tag identifier, thereby generating and storing log data of the contact situation of the wearable device with the further wearable device.
Figure 4 schematically illustrates an exemplary embodiment according to the present invention for realizing an individual contact tracing regarding the wearable device using a user's computing device, the server entity or functionality and the edge device.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

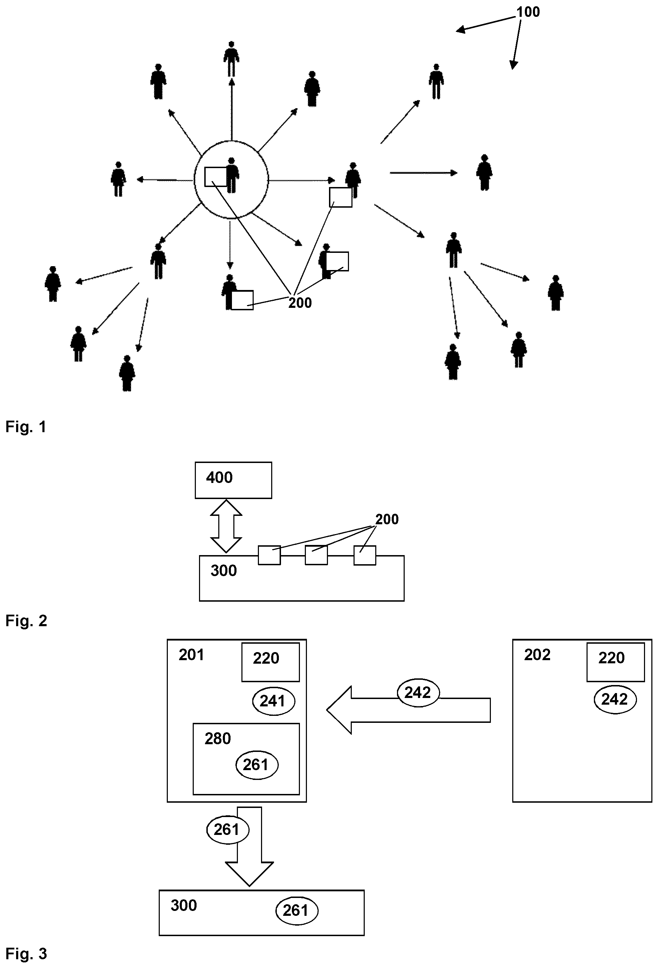

In Figure 1, a plurality of persons 100 in a contact detection and/or contact tracing setting are schematically represented, wherein each of the plurality of persons 100 is wearing or carrying a wearable device (or tag) of a plurality of wearable devices (or tags) 200, wherein for the sake of simplicity, Figure 1 only shows wearable devices 200 for four persons 100 explicitly.

In Figure 2, a situation of a plurality of wearable devices (or tags) 200 being connected to an edge device 300 is schematically shown, wherein the edge device 300 is communicating with a server entity or functionality 400.

In Figure 3, a contact situation of a (specific) wearable device 201 with a (specific) further wearable device 202 is schematically shown. Each of the wearable devices 201, 202 comprise, respectively, a wireless communication interface 220, and each of the wearable devices 201, 202 comprise, respectively, a tag identifier, the wearable device's tag identifier being indicated, in Figure 3, by means of reference sign 241, and the further wearable device's tag identifier being indicated by means of reference sign 242. By means of the wearable device's wireless communication interface 220, the wearable device 201 is able, with respect to the further wearable device 202, to determine repeatedly the or its distance (i.e. the distance of the wearable device 201) towards the further wearable device 202 and to receive the further wearable device's tag identifier 242 (by means of receiving radio frequency signals broadcast by the further wearable device 202 and comprising the further wearable device's tag identifier 242), thereby generating and storing log data 261 of the contact situation of the wearable device 201 with the further wearable device 202. Of course, analogous contact situations will typically also arise with respect to still further wearable devices (not individually indicated by means of references signs), i.e. the wearable device 201 will typically also receive the broadcast signals of these still further wearable devices, and, consequently, the log data 261 will typically also comprise information regarding the corresponding contact situations.

Figure 3 furthermore schematically shows the log data 261 of the wearable device 201 being stored in a suitable memory device or module of the wearable device 201 (i.e. the wearable device 201 comprises such a suitable memory device or module 280, only represented in Figure 3 for the wearable device 201) and being transferred to the edge device 300, shown in Figure 2. According to one embodiment of the present invention, the log data 261 (of the wearable device 201) are transferred to the edge device 300, typically once the wearable device 201 is - after having been used by a person, e.g. during a work shift or during a working day - put back to or with the edge device 300, especially for purposes of charging (the batteries of the wearable device 201) - a situation that is schematically shown in Figure 2.

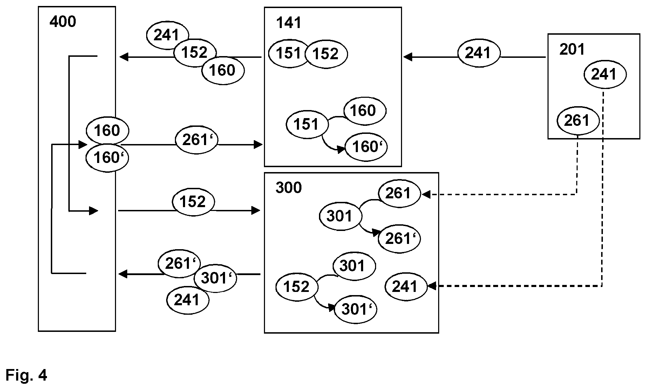

In Figure 4, an exemplary embodiment of the method according to the present invention is schematically shown, thereby realizing the possibility of a user-individual contact tracing regarding the wearable device 201 using a user's computing device 141, the server entity or functionality 400 as well as the edge device 300:
As has been explained especially with respect to Figure 3, in a contact situation of the wearable device 201 with the further wearable device 202, the wearable device 201 repeatedly (i.e. at different points in time) determines the distance towards the further wearable device 202 and receives the further wearable device's tag identifier 242, thereby generating and storing the log data 261 of especially the contact situation of the wearable device 201 with the further wearable device 202 (typically not only thereof but likely also information regarding additional contact situations of the wearable device 201 with still further wearable devices, i.e. this information (i.e. the respective distance data for different points in time and the still further wearable device's tag identifiers) is typically also part of the log data 261). After the wearable device 201 has been used (i.e. worn by the respective user or person of the plurality of persons 100), the wearable device 201 is typically put back to the edge device 300 and the log data 261 transferred to the edge device 300 in a protected manner, i.e. protected especially against eavesdropping the transmission of the - especially unencrypted log data 261 to the edge device 300.

According to the present invention, it is provided for a secured transfer of the log data 261 from the edge device 300 to the computing device 141 of the user (or person having worn the respective wearable device 201 the log data 261 stem from): The edge device 300 encrypts the log data 261 in a manner that only the computing device 141 is able to decrypt, thereby avoiding the possibility of any other interfering instance having access to these log data 261 in unencrypted form (i.e. the cleartext thereof). In this respect, it is proposed according to the present invention that the computing device 141 generates (in a sufficiently secure manner) a key pair comprising a private key 151 and a public key 152. The public key 152 will be transmitted to the edge device 300; this is realized by means of the computing device 141 transmitting the public key 152 to the server entity or functionality 400 (in the first step of the inventive method), and by means of the server entity or functionality 400 transmitting the public key 152 (prior to the third step) to the edge device 300. After having generated the log data 261, while the wearable device 201 being used, and stored the log data 261 in the memory device or module 280 of the wearable device 201, the log data 261 are transferred or transmitted to the edge device 300.

By means of using the public key 152, the edge device 300 is able to encrypt the log data 261 received from the wearable device 201, The resulting encrypted log data 261' (i.e. the cyphertext 261' of the unencrypted log data 261) is then able to be transmitted to the server entity or functionality 400, and from the server entity or functionality 400 to the computing device 141.

Additionally, the computing device 141 receives, from the wearable device 201, the wearable device's tag identifier 241 (especially in the second step but this could also happen in the first step or prior thereto, prior to or after the wearable device 201 being worn), and the computing device 141 transmits the wearable device's tag identifier 241 to the server entity or functionality 400.

According to a preferred embodiment of the present invention, the log data 261 are encrypted, by the edge device 300, as follows: the edge device 300 generates a random further key 301, encrypts the log data 261 using the further key 301, thereby generating the encrypted log data 261', and additionally encrypts the further key 301 using the public key 152, thereby generating the encrypted further key 301'. Both the encrypted log data 261', and the encrypted further key 301' are transmitted to the server entity or functionality 400, ready to be transmitted to the computing device 141 (in the fourth step of the inventive method).

According to the present invention, in order to provide for such a transfer of the encrypted log data 261' in a secured manner, the computing device 141 generates a log access token 160 - especially during the first step while or in connection with generating the private and public keys 151, 152 -, and transmits the log access token 160 to the server entity or functionality 400. In the fourth step, the encrypted log data 261' are able to be retrieved, by the computing device 141, from the server entity or functionality 400 by means of the computing device 141 requesting the encrypted log data 261' using both the log access token 160 and a signed log access token 160', the signed log access token 160' being signed by means of the private key 151 (i.e. corresponding to the (cleartext of the) log access token 160, encrypted using the private key 151) - and the signed log access token 160' is able to be verified, by the server entity or functionality 400, by means of using the public key 152.

According to preferred embodiment of the present invention, the wearable device's tag identifier 241 is transmitted, by the wearable device 201, to the computing device 141 using at least one out of the following:
-- an optical code, especially a QR-code, or an optically readable or detectable identifier statically provided on or attached to the wearable device 201 or dynamically displayed by means of a display device or module of the wearable device 201, and especially being scanned or otherwise detected by a camera device of or associated to the computing device 141,
-- RFID, radio frequency identification, technology between the wearable device 201 and an RFID reading component or module of the computing device 141,
-- the wireless communication interface 220 of the wearable device 201 - or a further wireless communication interface 220 of the wearable device 201, distinct from the wireless communication interface 220, especially according to one of the Bluetooth and Zigbee communication standards -, and a wireless communication interface of the computing device 141.

Furthermore it is preferred that, in the third step, the log data 261 are transmitted to the edge device 300 using a secure data transmission between the wearable device 201 and the edge device 300, either using a wireline communication interface of the wearable device 201 (especially using wireline contacts of the wearable device 201 used for charging the wearable device 201), or the wireless communication interface 220 of the wearable device 201 (or a further wireless communication interface 220 of the wearable device 201, especially according to one of the Bluetooth and Zigbee communication standards).

Hence, according to the present invention, it is advantageously possible to provide a solution for the situation that log data 261 of a wearable device 201 are available on or via the wearable device 201, but natively not on a person's personal computing device 141 such as a smart phone.

According to the present invention, it is especially differentiated between a "check-in phase," a "check-out phase," and an "update" phase. During check-in, the user picks up a tag (or wearable device 201) and, e.g., scans the QR code (or otherwise provides the tag identifier 241 to the computing device 141 or phone). At the same time, the phone (or computing device 141) generates an asymmetric key pair 251, 252, especially using RSA-3072 (or RSA-2048, or RSA-4096), and a random number, especially a 128-bit-UUID (or a 256-bit UUID), as the log access token, LAT 261. The ID (tag identifier 241), the public key (PuK) 252, and the log access token 261 are transmitted to the server entity or functionality 400, i.e. to a central component on the cloud, hereinafter also called log processing service, LPS. In use, the tag or wearable device 201 collects contact data (i.e. log data 261). Afterwards, the tag or wearable device 201 is returned to a charging board connected to an edge device (300), especially corresponding to a simple industrial computer: This is check-out. The user does nothing, but the edge device 300 reads the logs (i.e. the log data 261) from the tag or wearable device 201, downloads the appropriate public key PuK (public key 252) from the LPS (server entity or functionality 400), compresses the log data 261, encrypts it with a random AES-256 key K (i.e. the random further key 301), encrypts K 301 with PuK 252 to give K' (or encrypted further key 301'), and uploads the encrypted log 261' plus K' 301' to the LPS (or server entity or functionality 400). In the last phase, update, the phone (or computing device 141) uses its LAT 261 plus the signed LAT 261' (the LAT, encrypted with the private key 251 of the computing device 141) to retrieve the log data 261 (actually the encrypted log data 261') from the LPS (or server entity or functionality 400) after a certain customer-specific timeout. The downloaded data (i.e. the encrypted log data 261' and the encrypted further key 301') is then decrypted: The phone (computing device 141) knows the private key 251 necessary to decrypt K' 301', which gives K, which is then used to decrypt the encrypted log data 261', which is then decompressed. As a result, the log data 261 is on the phone, i.e. on the computing device 141, transmitted in a secure and protected manner.

## Claims

1. Method for enabling contact detection among a plurality of persons (100) and for enabling contact tracing for the plurality of persons (100) individually, by means of each of the plurality of persons (100) wearing or carrying a wearable device of a plurality of wearable devices (200), the wearable devices (200) having or being associated or assigned to, respectively, a tag identifier, the tag identifiers being repeatedly broadcast by the wearable devices (200), respectively, using a wireless communication interface (220) of the wearable devices (200),
wherein, in a contact situation of a wearable device (201) with a further wearable device (202) of the plurality of wearable devices (200), the wearable device (201) is able, by means of the wearable device's wireless communication interface (220) and with respect to the further wearable device (202), to determine repeatedly the distance, at different points in time, towards the further wearable device (202) and to receive the further wearable device's tag identifier (242), thereby generating and storing log data (261) of the contact situation of the wearable device (201) with the further wearable device (202),
wherein in order to provide for an individual contact tracing regarding the wearable device (201) a computing device (141), associated to the person wearing the wearable device (201), is used as well as a server entity or functionality (400) and an edge device (300), the method comprising the following steps:
-- in a first step, the computing device (141) generates a key pair comprising a private key (151) and a public key (152), and the computing device (141) transmits the public key (152) to the server entity or functionality (400),
-- in a second step, the log data (261), being generated while the wearable device (201) is used, are stored in the wearable device (201), and the computing device (141) receives, from the wearable device (201), the wearable device's tag identifier (241),
-- in a third step, the log data (261), stored in the wearable device (201), are transmitted to the edge device (300), encrypted, by the edge device (300), involving the public key (152), and transmitted as encrypted log data (261') to the server entity or functionality (400),
-- in a fourth step, the encrypted log data (261') are transmitted from the server entity or functionality (400) to the computing device (141).

2. Method according to claim 1, wherein, prior to the third step, the public key (152) is transmitted, by the server entity or functionality (400), to the edge device (300), wherein during the third step, the edge device (300)
-- generates a random further key (301),
-- encrypts the log data (261) using the further key (301), thereby generating the encrypted log data (261'), and
-- additionally encrypts the further key (301) using the public key (152), thereby generating the encrypted further key (301'),
wherein both the encrypted log data (261'), and the encrypted further key (301') are transmitted to the server entity or functionality (400).

3. Method according to one of the preceding claims, wherein the wearable device's tag identifier (241) is transmitted, by the wearable device (201), to the computing device (141) prior to or after the wearable device (201) being worn,
wherein the wearable device's tag identifier (241) is especially transmitted to the computing device (141) using at least one out of the following:
-- an optical code, especially a QR-code, or an optically readable or detectable identifier statically provided on or attached to the wearable device (201) or dynamically displayed by means of a display device or module of the wearable device (201), and especially being scanned or otherwise detected by a camera device of or associated to the computing device (141),
-- RFID, radio frequency identification, technology between the wearable device (201) and an RFID reading component or module of the computing device (141),
-- the wireless communication interface (220) of the wearable device (201) - or a further wireless communication interface (220) of the wearable device (201), distinct from the wireless communication interface (220), especially according to one of the Bluetooth and Zigbee communication standards -, and a wireless communication interface of the computing device (141).

4. Method according to one of the preceding claims, wherein, in the third step, the log data (261) are transmitted to the edge device (300) using a secure data transmission between the wearable device (201) and the edge device (300), using
-- a wireline communication interface of the wearable device (201), especially using wireline contacts of the wearable device (201) used for charging the wearable device (201), or
-- the wireless communication interface (220) of the wearable device (201) or a further wireless communication interface (220) of the wearable device (201).

5. Method according to one of the preceding claims, wherein the computing device (141) generates a log access token (160) - especially during the first step while or in connection with generating the private and public keys (151, 152) -, and transmits the log access token (160) to the server entity or functionality (400).

6. Method according to one of the preceding claims, wherein, in the fourth step, the encrypted log data (261') are able to be retrieved, by the computing device (141), from the server entity or functionality (400) by means of the computing device (141) requesting the encrypted log data (261') using both the log access token (160) and a signed log access token (160'), the signed log access token (160') being signed by means of the private key (151).

7. Method according to one of the preceding claims, wherein the wireless communication interface (220) of the wearable devices (200) is an ultra-wideband interface allowing for a high-precision contact detection and tracing.

8. System for enabling contact detection among a plurality of persons (100) and for enabling contact tracing for the plurality of persons (100) individually, by means of each of the plurality of persons (100) wearing or carrying a wearable device of a plurality of wearable devices (200), the system comprising, besides the plurality of wearable devices (200), a server entity or functionality (400), an edge device (300), and computing devices, the wearable devices (200) having or being associated or assigned to, respectively, a tag identifier, the tag identifiers being repeatedly broadcast by the wearable devices (200), respectively, using a wireless communication interface (220) of the wearable devices (200),
wherein, in a contact situation of a wearable device (201) with a further wearable device (202) of the plurality of wearable devices (200), the wearable device (201) is able, by means of the wearable device's wireless communication interface (220) and with respect to the further wearable device (202), to determine repeatedly the distance, at different points in time, towards the further wearable device (202) and to receive the further wearable device's tag identifier (242), thereby generating and storing log data (261) of the contact situation of the wearable device (201) with the further wearable device (202),
wherein in order to provide for an individual contact tracing regarding the wearable device (201) a computing device (141), associated to the person wearing the wearable device (201), is used, wherein the system is configured such that:
-- the computing device (141) generates a key pair comprising a private key (151) and a public key (152), and the computing device (141) transmits the public key (152) to the server entity or functionality (400),
-- the log data (261), being generated while the wearable device (201) is used, are stored in the wearable device (201), and the computing device (141) receives, from the wearable device (201), the wearable device's tag identifier (241),
-- the log data (261), stored in the wearable device (201), are transmitted to the edge device (300), encrypted, by the edge device (300), involving the public key (152), and transmitted as encrypted log data (261') to the server entity or functionality (400),
-- the encrypted log data (261') are transmitted from the server entity or functionality (400) to the computing device (141).

9. Program comprising a computer readable program code, which, when executed in part on a computing device (141) and in part on a server entity or functionality (400) and in part on an edge device (300) and in part on a wearable device (201), causes the computing device (141) and the server entity or functionality (400) and the edge device (300) and the wearable device (201) to perform a method according one of claims 1 to 7.

10. Computer-readable medium comprising instructions which when executed in part on a computing device (141) and in part on a server entity or functionality (400) and in part on an edge device (300) and in part on a wearable device (201), causes the computer and the computing device (141) and the server entity or functionality (400) and the edge device (300) and the wearable device (201) to perform a method according one of claims 1 to 7.

## Patentansprüche

1. Verfahren zum Ermöglichen einer Kontakterkennung unter einer Vielzahl von Personen (100) und zum Ermöglichen einer Kontaktnachverfolgung für die Vielzahl von Personen (100) individuell, indem jede der Vielzahl von Personen (100) ein tragbares Gerät einer Vielzahl von tragbaren Geräten (200) trägt oder bei sich führt, wobei die tragbaren Geräte (200) jeweils einen Tag-Identifikator haben oder diesem zugeordnet sind, wobei die Tag-Identifikatoren wiederholt von den tragbaren Geräten (200) mittels einer drahtlosen Kommunikationsschnittstelle (220) der tragbaren Geräte (200) per Broadcast gesendet werden,
wobei in einer Kontaktsituation eines tragbaren Geräts (201) mit einem weiteren tragbaren Gerät (202) der Vielzahl von tragbaren Geräten (200) das tragbare Gerät (201) in der Lage ist, mittels der drahtlosen Kommunikationsschnittstelle (220) des tragbaren Geräts und in Bezug auf das weitere tragbare Gerät (202), wiederholt die Entfernung zu verschiedenen Zeitpunkten zu dem weiteren tragbaren Gerät (202) zu bestimmen und den Tag-Identifikator (242) des weiteren tragbaren Geräts zu empfangen, wodurch Protokolldaten (261) der Kontaktsituation des tragbaren Geräts (201) mit dem weiteren tragbaren Gerät (202) erzeugt und gespeichert werden,
wobei zur Bereitstellung einer individuellen Kontaktnachverfolgung bezüglich des tragbaren Geräts (201) ein Rechengerät (141), das der Person zugeordnet ist, die das tragbare Gerät (201) trägt, sowie eine Server-Entität oder Funktionalität (400) und ein Edge-Gerät (300) verwendet werden, wobei das Verfahren die folgenden Schritte umfasst:
- - in einem ersten Schritt erzeugt das Rechengerät (141) ein Schlüsselpaar, das einen privaten Schlüssel (151) und einen öffentlichen Schlüssel (152) umfasst, und das Rechengerät (141) überträgt den öffentlichen Schlüssel (152) an die Server-Entität oder Funktionalität (400),
- - in einem zweiten Schritt werden die Protokolldaten (261), die erzeugt werden, während das tragbare Gerät (201) verwendet wird, in dem tragbaren Gerät (201) gespeichert, und das Rechengerät (141) empfängt von dem tragbaren Gerät (201) den Tag-Identifikator (241) des tragbaren Geräts,
- - in einem dritten Schritt werden die Protokolldaten (261), die in dem tragbaren Gerät (201) gespeichert sind, an das Edge-Gerät (300) übertragen, von dem Edge-Gerät (300) unter Einbeziehung des öffentlichen Schlüssels (152) verschlüsselt und als verschlüsselte Protokolldaten (261') an die Server-Entität oder Funktionalität (400) übertragen,
- - in einem vierten Schritt werden die verschlüsselten Protokolldaten (261') von der Server-Entität oder Funktionalität (400) an das Rechengerät (141) übertragen.

2. Verfahren nach Anspruch 1, wobei vor dem dritten Schritt der öffentliche Schlüssel (152) von der Server-Entität oder Funktionalität (400) an das Edge-Gerät (300) übertragen wird, wobei während des dritten Schritts das Edge-Gerät (300)
-- einen zufälligen weiteren Schlüssel (301) erzeugt,
-- die Protokolldaten (261) unter Verwendung des weiteren Schlüssels (301) verschlüsselt, wodurch die verschlüsselten Protokolldaten (261') erzeugt werden, und
**--** zusätzlich den weiteren Schlüssel (301) unter Verwendung des öffentlichen Schlüssels (152) verschlüsselt, wodurch der verschlüsselte weitere Schlüssel (301') erzeugt wird,
wobei sowohl die verschlüsselten Protokolldaten (261') als auch der verschlüsselte weitere Schlüssel (301') an die Server-Entität oder Funktionalität (400) übertragen werden.

3. Verfahren nach einem der vorhergehenden Ansprüche, wobei der Tag-Identifikator (241) des tragbaren Geräts von dem tragbaren Gerät (201) an das Rechengerät (141) vor oder nach dem Tragen des tragbaren Geräts (201) übertragen wird, wobei der Tag-Identifikator (241) des tragbaren Geräts insbesondere an das Rechengerät (141) unter Verwendung von mindestens einem der folgenden übertragen wird:
-- ein optischer Code, insbesondere ein QR-Code, oder ein optisch lesbarer oder erfassbarer Identifikator, der statisch auf dem tragbaren Gerät (201) angebracht oder befestigt ist oder dynamisch mittels einer Anzeigevorrichtung oder eines Moduls des tragbaren Geräts (201) angezeigt wird, und insbesondere von einer Kameravorrichtung des Rechengeräts (141) oder einer diesem zugeordneten Kameravorrichtung gescannt oder anderweitig erfasst wird,
**--** RFID-, Radiofrequenz-Identifikations-Technologie zwischen dem tragbaren Gerät (201) und einer RFID-Lesekomponente oder einem Modul des Rechengeräts (141),
**--** die drahtlose Kommunikationsschnittstelle (220) des tragbaren Geräts (201) **--** oder eine weitere drahtlose Kommunikationsschnittstelle (220) des tragbaren Geräts (201), verschieden von der drahtlosen Kommunikationsschnittstelle (220), insbesondere gemäß einem der Bluetooth- und Zigbee-Kommunikationsstandards --, und eine drahtlose Kommunikationsschnittstelle des Rechengeräts (141).

4. Verfahren nach einem der vorhergehenden Ansprüche, wobei im dritten Schritt die Protokolldaten (261) an das Edge-Gerät (300) unter Verwendung einer sicheren Datenübertragung zwischen dem tragbaren Gerät (201) und dem Edge-Gerät (300) übertragen werden, unter Verwendung von
-- einer drahtgebundenen Kommunikationsschnittstelle des tragbaren Geräts (201), insbesondere unter Verwendung von drahtgebundenen Kontakten des tragbaren Geräts (201), die zum Aufladen des tragbaren Geräts (201) verwendet werden, oder
**--** der drahtlosen Kommunikationsschnittstelle (220) des tragbaren Geräts (201) oder einer weiteren drahtlosen Kommunikationsschnittstelle (220) des tragbaren Geräts (201).

5. Verfahren nach einem der vorhergehenden Ansprüche, wobei das Rechengerät (141) ein Protokollzugangs-Token (160) erzeugt **--** insbesondere während des ersten Schritts während oder im Zusammenhang mit der Erzeugung der privaten und öffentlichen Schlüssel (151, 152) --, und das Protokollzugangs-Token (160) an die Server-Entität oder Funktionalität (400) überträgt.

6. Verfahren nach einem der vorhergehenden Ansprüche, wobei im vierten Schritt die verschlüsselten Protokolldaten (261') von dem Rechengerät (141) von der Server-Entität oder Funktionalität (400) abgerufen werden können, indem das Rechengerät (141) die verschlüsselten Protokolldaten (261') unter Verwendung sowohl des Protokollzugangs-Tokens (160) als auch eines signierten Protokollzugangs-Tokens (160') anfordert, wobei das signierte Protokollzugangs-Token (160') mittels des privaten Schlüssels (151) signiert ist.

7. Verfahren nach einem der vorhergehenden Ansprüche, wobei die drahtlose Kommunikationsschnittstelle (220) der tragbaren Geräte (200) eine Ultrabreitband-Schnittstelle ist, die eine hochpräzise Kontakterkennung und Nachverfolgung ermöglicht.

8. System zum Ermöglichen einer Kontakterkennung unter einer Vielzahl von Personen (100) und zum Ermöglichen einer Kontaktnachverfolgung für die Vielzahl von Personen (100) individuell, indem jede der Vielzahl von Personen (100) ein tragbares Gerät einer Vielzahl von tragbaren Geräten (200) trägt oder bei sich führt, wobei das System neben der Vielzahl von tragbaren Geräten (200) eine Server-Entität oder Funktionalität (400), ein Edge-Gerät (300) und Rechengeräte umfasst, wobei die tragbaren Geräte (200) jeweils einen Tag-Identifikator haben oder diesem zugeordnet sind, wobei die Tag-Identifikatoren wiederholt von den tragbaren Geräten (200) mittels einer drahtlosen Kommunikationsschnittstelle (220) der tragbaren Geräte (200) per Broadcast gesendet werden,
wobei in einer Kontaktsituation eines tragbaren Geräts (201) mit einem weiteren tragbaren Gerät (202) der Vielzahl von tragbaren Geräten (200) das tragbare Gerät (201) in der Lage ist, mittels der drahtlosen Kommunikationsschnittstelle (220) des tragbaren Geräts und in Bezug auf das weitere tragbare Gerät (202), wiederholt die Entfernung zu verschiedenen Zeitpunkten zu dem weiteren tragbaren Gerät (202) zu bestimmen und den Tag-Identifikator (242) des weiteren tragbaren Geräts zu empfangen, wodurch Protokolldaten (261) der Kontaktsituation des tragbaren Geräts (201) mit dem weiteren tragbaren Gerät (202) erzeugt und gespeichert werden,
wobei zur Bereitstellung einer individuellen Kontaktnachverfolgung bezüglich des tragbaren Geräts (201) ein Rechengerät (141), das der Person zugeordnet ist, die das tragbare Gerät (201) trägt, verwendet wird, wobei das System derart konfiguriert ist, dass:
-- das Rechengerät (141) ein Schlüsselpaar erzeugt, das einen privaten Schlüssel (151) und einen öffentlichen Schlüssel (152) umfasst, und das Rechengerät (141) den öffentlichen Schlüssel (152) an die Server-Entität oder Funktionalität (400) überträgt,
-- die Protokolldaten (261), die erzeugt werden, während das tragbare Gerät (201) verwendet wird, in dem tragbaren Gerät (201) gespeichert werden, und das Rechengerät (141) von dem tragbaren Gerät (201) den Tag-Identifikator (241) des tragbaren Geräts empfängt,
-- die Protokolldaten (261), die in dem tragbaren Gerät (201) gespeichert sind, an das Edge-Gerät (300) übertragen werden, von dem Edge-Gerät (300) unter Einbeziehung des öffentlichen Schlüssels (152) verschlüsselt werden und als verschlüsselte Protokolldaten (261') an die Server-Entität oder Funktionalität (400) übertragen werden,
-- die verschlüsselten Protokolldaten (261') von der Server-Entität oder Funktionalität (400) an das Rechengerät (141) übertragen werden.

9. Programm, das einen computerlesbaren Programmcode umfasst, der, wenn er teilweise auf einem Rechengerät (141) und teilweise auf einer Server-Entität oder Funktionalität (400) und teilweise auf einem Edge-Gerät (300) und teilweise auf einem tragbaren Gerät (201) ausgeführt wird, das Rechengerät (141) und die Server-Entität oder Funktionalität (400) und das Edge-Gerät (300) und das tragbare Gerät (201) veranlasst, ein Verfahren nach einem der Ansprüche 1 bis 7 durchzuführen.

10. Computerlesbares Medium, das Anweisungen umfasst, die, wenn sie teilweise auf einem Rechengerät (141) und teilweise auf einer Server-Entität oder Funktionalität (400) und teilweise auf einem Edge-Gerät (300) und teilweise auf einem tragbaren Gerät (201) ausgeführt werden, den Computer und das Rechengerät (141) und die Server-Entität oder Funktionalität (400) und das Edge-Gerät (300) und das tragbare Gerät (201) veranlassen, ein Verfahren nach einem der Ansprüche 1 bis 7 durchzuführen.

## Revendications

1. Procédé permettant la détection de contact parmi une pluralité de personnes (100) et permettant le traçage de contacts pour la pluralité de personnes (100) individuellement, au moyen de chacune de la pluralité de personnes (100) portant ou transportant un dispositif portable d'une pluralité de dispositifs portables (200), les dispositifs portables (200) ayant ou étant associés ou attribués, respectivement, à un identifiant de balise, les identifiants de balise étant répétitivement diffusés par les dispositifs portables (200), respectivement, en utilisant une interface de communication sans fil (220) des dispositifs portables (200),
dans lequel, dans une situation de contact d'un dispositif portable (201) avec un autre dispositif portable (202) de la pluralité de dispositifs portables (200), le dispositif portable (201) est capable, au moyen de l'interface de communication sans fil (220) du dispositif portable et par rapport à l'autre dispositif portable (202), de déterminer de manière répétée la distance, à différents moments, vers l'autre dispositif portable (202) et de recevoir l'identifiant de balise (242) de l'autre dispositif portable, générant et stockant ainsi des données de journal (261) de la situation de contact du dispositif portable (201) avec l'autre dispositif portable (202),
dans lequel, afin de permettre un traçage de contacts individuel concernant le dispositif portable (201), un dispositif informatique (141), associé à la personne portant le dispositif portable (201), est utilisé ainsi qu'une entité serveur ou fonctionnalité (400) et un dispositif edge (300), le procédé comprenant les étapes suivantes :
-- dans une première étape, le dispositif informatique (141) génère une paire de clés comprenant une clé privée (151) et une clé publique (152), et le dispositif informatique (141) transmet la clé publique (152) à l'entité serveur ou fonctionnalité (400),
-- dans une deuxième étape, les données de journal (261), étant générées pendant que le dispositif portable (201) est utilisé, sont stockées dans le dispositif portable (201), et le dispositif informatique (141) reçoit, du dispositif portable (201), l'identifiant de balise (241) du dispositif portable,
-- dans une troisième étape, les données de journal (261), stockées dans le dispositif portable (201), sont transmises au dispositif edge (300), chiffrées, par le dispositif edge (300), impliquant la clé publique (152), et transmises en tant que données de journal chiffrées (261') à l'entité serveur ou fonctionnalité (400),
**--** dans une quatrième étape, les données de journal chiffrées (261') sont transmises de l'entité serveur ou fonctionnalité (400) au dispositif informatique (141).

2. Procédé selon la revendication 1, dans lequel, avant la troisième étape, la clé publique (152) est transmise, par l'entité serveur ou fonctionnalité (400), au dispositif edge (300), dans lequel pendant la troisième étape, le dispositif edge (300)
-- génère une autre clé aléatoire (301),
-- chiffre les données de journal (261) en utilisant l'autre clé (301), générant ainsi les données de journal chiffrées (261'), et
-- chiffre en outre l'autre clé (301) en utilisant la clé publique (152), générant ainsi l'autre clé chiffrée (301'),
dans lequel à la fois les données de journal chiffrées (261') et l'autre clé chiffrée (301') sont transmises à l'entité serveur ou fonctionnalité (400).

3. Procédé selon l'une des revendications précédentes, dans lequel l'identifiant de balise (241) du dispositif portable est transmis, par le dispositif portable (201), au dispositif informatique (141) avant ou après que le dispositif portable (201) soit porté, dans lequel l'identifiant de balise (241) du dispositif portable est en particulier transmis au dispositif informatique (141) en utilisant au moins l'un des éléments suivants :
-- un code optique, en particulier un code QR, ou un identifiant lisible ou détectable optiquement fourni statiquement sur ou attaché au dispositif portable (201) ou affiché dynamiquement au moyen d'un dispositif d'affichage ou d'un module du dispositif portable (201), et en particulier étant scanné ou autrement détecté par un dispositif de caméra du dispositif informatique (141) ou associé à celui-ci,
-- la technologie RFID, identification par radiofréquence, entre le dispositif portable (201) et un composant de lecture ou module RFID du dispositif informatique (141),
-- l'interface de communication sans fil (220) du dispositif portable (201) -- ou une autre interface de communication sans fil (220) du dispositif portable (201), distincte de l'interface de communication sans fil (220), en particulier selon l'une des normes de communication Bluetooth et Zigbee --, et une interface de communication sans fil du dispositif informatique (141).

4. Procédé selon l'une des revendications précédentes, dans lequel, dans la troisième étape, les données de journal (261) sont transmises au dispositif edge (300) en utilisant une transmission de données sécurisée entre le dispositif portable (201) et le dispositif edge (300), en utilisant
-- une interface de communication filaire du dispositif portable (201), en particulier en utilisant des contacts filaires du dispositif portable (201) utilisés pour charger le dispositif portable (201), ou
-- l'interface de communication sans fil (220) du dispositif portable (201) ou une autre interface de communication sans fil (220) du dispositif portable (201).

5. Procédé selon l'une des revendications précédentes, dans lequel le dispositif informatique (141) génère un jeton d'accès au journal (160) **--** en particulier pendant la première étape pendant ou en relation avec la génération des clés privée et publique (151, 152) --, et transmet le jeton d'accès au journal (160) à l'entité serveur ou fonctionnalité (400).

6. Procédé selon l'une des revendications précédentes, dans lequel, dans la quatrième étape, les données de journal chiffrées (261') peuvent être récupérées, par le dispositif informatique (141), de l'entité serveur ou fonctionnalité (400) au moyen du dispositif informatique (141) demandant les données de journal chiffrées (261') en utilisant à la fois le jeton d'accès au journal (160) et un jeton d'accès au journal signé (160'), le jeton d'accès au journal signé (160') étant signé au moyen de la clé privée (151).

7. Procédé selon l'une des revendications précédentes, dans lequel l'interface de communication sans fil (220) des dispositifs portables (200) est une interface ultra-large bande permettant une détection de contact et un traçage de haute précision.

8. Système permettant la détection de contact parmi une pluralité de personnes (100) et permettant le traçage de contacts pour la pluralité de personnes (100) individuellement, au moyen de chacune de la pluralité de personnes (100) portant ou transportant un dispositif portable d'une pluralité de dispositifs portables (200), le système comprenant, outre la pluralité de dispositifs portables (200), une entité serveur ou fonctionnalité (400), un dispositif edge (300), et des dispositifs informatiques, les dispositifs portables (200) ayant ou étant associés ou attribués, respectivement, à un identifiant de balise, les identifiants de balise étant répétitivement diffusés par les dispositifs portables (200), respectivement, en utilisant une interface de communication sans fil (220) des dispositifs portables (200),
dans lequel, dans une situation de contact d'un dispositif portable (201) avec un autre dispositif portable (202) de la pluralité de dispositifs portables (200), le dispositif portable (201) est capable, au moyen de l'interface de communication sans fil (220) du dispositif portable et par rapport à l'autre dispositif portable (202), de déterminer de manière répétée la distance, à différents moments, vers l'autre dispositif portable (202) et de recevoir l'identifiant de balise (242) de l'autre dispositif portable, générant et stockant ainsi des données de journal (261) de la situation de contact du dispositif portable (201) avec l'autre dispositif portable (202),
dans lequel, afin de permettre un traçage de contacts individuel concernant le dispositif portable (201), un dispositif informatique (141), associé à la personne portant le dispositif portable (201), est utilisé, dans lequel le système est configuré de telle sorte que :
-- le dispositif informatique (141) génère une paire de clés comprenant une clé privée (151) et une clé publique (152), et le dispositif informatique (141) transmet la clé publique (152) à l'entité serveur ou fonctionnalité (400),
**--** les données de journal (261), étant générées pendant que le dispositif portable (201) est utilisé, sont stockées dans le dispositif portable (201), et le dispositif informatique (141) reçoit, du dispositif portable (201), l'identifiant de balise (241) du dispositif portable,
-- les données de journal (261), stockées dans le dispositif portable (201), sont transmises au dispositif edge (300), chiffrées, par le dispositif edge (300), impliquant la clé publique (152), et transmises en tant que données de journal chiffrées (261') à l'entité serveur ou fonctionnalité (400),
-- les données de journal chiffrées (261') sont transmises de l'entité serveur ou fonctionnalité (400) au dispositif informatique (141).

9. Programme comprenant un code de programme lisible par ordinateur qui, lorsqu'il est exécuté en partie sur un dispositif informatique (141) et en partie sur une entité serveur ou fonctionnalité (400) et en partie sur un dispositif edge (300) et en partie sur un dispositif portable (201), amène le dispositif informatique (141) et l'entité serveur ou fonctionnalité (400) et le dispositif edge (300) et le dispositif portable (201) à effectuer un procédé selon l'une des revendications 1 à 7.

10. Support lisible par ordinateur comprenant des instructions qui, lorsqu'elles sont exécutées en partie sur un dispositif informatique (141) et en partie sur une entité serveur ou fonctionnalité (400) et en partie sur un dispositif edge (300) et en partie sur un dispositif portable (201), amènent l'ordinateur et le dispositif informatique (141) et l'entité serveur ou fonctionnalité (400) et le dispositif edge (300) et le dispositif portable (201) à effectuer un procédé selon l'une des revendications 1 à 7.
